# EUROPÄISCHE PATENTSCHRIFT

(11) **EP 3 328 572 B1**
(45) Veröffentlichungstag und Bekanntmachung des Hinweises auf die Patenterteilung: **09.10.2019**
(21) Anmeldenummer: 15750009.1
(22) Anmeldetag: 31.07.2015
(51) Int. Cl.: B21H 1/06, B21C 51/00

(54) **VERFAHREN ZUM HERSTELLEN EINES KONTURIERTEN RINGWALZPRODUKTES**
METHOD FOR PRODUCING A CONTOURED RING ROLLING PRODUCT
PROCÉDÉ DE FABRICATION D'UN PRODUIT PROFILÉ OBTENU PAR LAMINAGE CIRCULAIRE

(43) Veröffentlichungstag der Anmeldung: 06.06.2018
(73) Patentinhaber: Otto Fuchs - Kommanditgesellschaft -, 58540 Meinerzhagen (DE)
(72) Erfinder: WITULSKI, Thomas, 58540 Meinerzhagen (DE); IHNE, Jörg, 58840 Plettenberg (DE); TESCHNER, Stefan, 58540 Meinerzhagen (DE); MÜLLER, Christof, 57413 Finnentrop (DE)
(74) Vertreter: Haverkamp, Jens
(86) Internationale Anmeldenummer: PCT/EP2015/067629
(87) Internationale Veröffentlichungsnummer: WO 2017/020922

(56) Entgegenhaltungen:
- CH-A5- 618 111
- JP-A- S54 155 977
- JP-A- 2000 071 039
- JP-A- 2007 301 604

## Beschreibung

Die Erfindung betrifft ein Ringwalzverfahren zum Herstellen eines konturierten Ringwalzproduktes.
Neben Schmieden wird Ringwalzen zum Herstellen von Ringen, insbesondere auch konturierten Ringen als Warmumformverfahren eingesetzt. Während beim Schmieden ein zuvor auf Schmiedetemperatur erwärmter Rohling in einem Gesenk in seine gewünschte Form durch Warmumformung gebracht wird, wird beim Ringwalzen ein zuvor erwärmter Ringrohling durch ein oder mehrere Walzschritte in die gewünschte Form gewalzt. Gegenüber dem Prozess des Schmiedens wird das Ringwalzen als sehr viel flexibler im Bezug auf die mit einer Ringwalzmaschine zu formenden Ringwalzprodukte angesehen. Für das konturierte Ringwalzen werden vielfach Radial-Axial-Walzwerke eingesetzt. In derartigen Ringwalzmaschinen werden in einem Walzschritt gleichzeitig sowohl die Ringhöhe als auch die Ringwandstärke reduziert, und zwar unter Einbringung der jeweils gewünschten Kontur. Um ausgehend von einem Ringrohling zu dem gewünschten Ringwalzendprodukt zu gelangen, ist es in aller Regel erforderlich, den Ringwalzprozess in mehreren Schritten durchzuführen. Zwischen jedem Ringwalzschritt wird der Ringrohling erneut erwärmt oder nachgewärmt.
Jede Ringwalzmaschine verfügt über eine Steuereinrichtung zum Steuern des Walzprozesses. Überwacht werden durch die Steuerung bestimmte Verfahrensparameter, wie beispielsweise die Ringwachsgeschwindigkeit, die axiale und radiale Walzkraft oder auch die Temperatur des Walzlings während des Walzprozesses. Vorgegeben wird bei dieser Steuerung in Bezug auf die jeweiligen Verfahrensparameter jeweils ein Wert. Aufgrund von Toleranzen in der Geometrie des jeweiligen Ringrohlings und dem Verhalten desselben während des Walzens können Fehler in der Ringgeometrie und/oder im Gefüge des fertigen Ringwalzproduktes entstehen. Daher gilt das Ringwalzen für Teile mit höchsten Anforderungen als nicht prozesssicher genug. Und wird daher nicht oder nur als vorbereitender Schritt für einen abschließenden Gesenkschmiedeschritt bei Anwendungen, bei denen das Ringwalzprodukt nur enge Toleranzgrenzen aufweisen darf und in diesen Toleranzgrenzen reproduzierbar hergestellt werden soll, nicht eingesetzt. Bei mit hohen Drehzahlen rotierenden Teilen, wie beispielsweise bei Teilen von Flugzeug- oder Gasturbinen werden hohe Anforderungen an das Eigenschaftsprofil der Umformprodukte gestellt. Aus diesem Grunde werden derartige Bauteile, wie beispielsweise Triebwerksscheiben oder dergleichen durch Gesenkschmieden aus einem Schmiederohling geformt. Aufgrund der verglichen mit einem Ringwalzen nur geringen Anzahl an Verfahrensparametern können Teile, insbesondere wenn an diese hohe Anforderungen bei engen Toleranzgrenzen gestellt sind, mit Gesenkschmieden reproduzierbar und damit ohne manuellen Eingriff hergestellt werden. Auf Grund der inkrementellen Umformung im axialen und radialen Walzspalt und durch die in der Steuerung des Walzwerkes implementierte Regelung ist die Verformung über den Umfang des gewalzten Rings nicht konstant. Dies kann zu einem umfänglich inhomogenen Gefüge des Rings führen, das zu inhomogenen Eigenschaften der Triebwerksscheibe führen kann. Bei größeren Abweichungen von überwachten Verfahrensparametern kann es erforderlich werden, manuell in den Ringwalzprozess einzugreifen. Zudem kann den Ringwalzprodukten nicht angesehen werden, ob diese den daran gesetzten Vorraussetzungen tatsächlich genügen. Aus diesem Grund und aufgrund eines nicht auszuschließenden manuellen Eingreifens werden Ringwalzprodukte, die in besonders engen Toleranzgrenzen hergestellt werden sollen, nicht oder nicht hinreichend als reproduzierbar angesehen.

Auch wenn derartige hoch belastbare rotierende Teile, etwa Triebwerksscheiben, aus einer Nickelbasislegierung durch Gesenkschmieden reproduzierbar hergestellt werden können, müssen auch beim Gesenkschmieden gewisse Nachteile in Kauf genommen werden. Als nachteilig wird mitunter der beim Schmieden unvermeidbar entstehende Grat an dem Schmiedeprodukt angesehen, der nach dem Umformprozess zu entfernen ist. Dieses erfordert einen weiteren Bearbeitungsschritt. Das typischerweise für derartige Teile eingesetzt Material, wie beispielsweise eine Nickelbasislegierung ist vom Materialeinsatz her relativ teuer. Der beim Schmieden unvermeidbare und nachträglich zu entfernende Grat hat daher im Bezug auf das Schmiedeprodukt einen erhöhten Materialeinsatz zur Folge. Darüber hinaus ergibt sich aus der notwendigen Gestalt des Gesenkschmiedeprodukts häufig der Nachteil, dass mitunter das Gefüge der Schmiedeprodukte in einigen Bereichen nicht den Anforderungen an eine Feinkörnigkeit entspricht, da in diesen Bereichen trotzt des Umformens grobes Korn zu finden ist. Dieses ließe sich nur durch eine Materialaufdickung erreichen, was allerdings nicht gewünscht ist

JP 2000-071039 A offenbart ein Verfahren und eine Vorrichtung zum Überwachen der Arbeitsbedingungen einer Walzmaschine. Zur Steuerung des Walzprozesses werden aktuelle Walzparameter mit hinterlegten Parametern verglichen, wie dieses bei herkömmlichen Walzprozessen üblich ist.

Ausgehend von dem eingangs diskutierten Stand der Technik liegt der Erfindung daher die Aufgabe zugrunde, ein Ringwalzverfahren vorzuschlagen, mit dem, den Anforderungen an eine Reproduzierbarkeit genügend, auch Bauteile mit höchsten Eigenschaftsanforderungen und Toleranzbereichen hergestellt werden können, die für rotierende Anwendungen in beanspruchter Umgebung eingesetzt werden können.

Gelöst wird diese Aufgabe erfindungsgemäß zum Einen durch ein Verfahren zum reproduzierbaren Herstellen eines konturierten Ringwalzproduktes für eine rotierende Anwendung, mit einer prozessüberwacht gesteuerten Ringwalzmaschine, insbesondere aus einem aufgrund seiner Beschaffenheit rissempfindlichen Ringrohling aus Metall, umfassend die Schritte:
- Definieren zumindest eines sich über die Walzzeit erstreckenden Prozessfensters zu vorausgewählten Verfahrensparametern für ein bestimmtes, mit dieser Ringwalzmaschine in seine Endform zu formendes Ringwalzprodukt anhand von mit dieser Ringwalzmaschine in ihre Endform geformten Kalibrierproben, wobei das oder die Prozessfenster von bei der Durchführung des Verfahrens überwachten Prozessparametern durch die Prozessparameter derjenigen Kalibrierproben bestimmt werden, deren Walzprodukt den an das herzustellende Ringwalzprodukt gestellten Anforderungen genügen, wobei die vorausgewählten Verfahrensparameter wenigstens zwei der folgenden Verfahrensparameter umfassen:
   - Ringwachsgeschwindigkeit,
   - axiale Walzkraft,
   - radiale Walzkraft,
   - Walzzeit,
   - Temperatur des Ringrohlings während des Walzprozesses und nachfolgend
- konturiertes Ringwalzen von Ringrohlingen zum Herstellen der Ringwalzprodukte, wobei die aktuellen Walzparameter des Walzlings in Bezug auf die zumindest zwei ausgewählten Verfahrensparameter erfasst und daraufhin ausgewertet werden, ob diese Verfahrensparameter innerhalb des vordefinierten Prozessfensters liegen und dass nur diejenigen Ringwalzprodukte in die weitere Be- und/oder Verarbeitung eingehen, die mit Verfahrensparametern ringgewalzt worden sind, die innerhalb der Prozessfenster liegen.

Gelöst wird diese Aufgabe erfindungsgemäß des Weiteren durch ein Verfahren zum reproduzierbaren Herstellen eines konturierten Ringwalzproduktes für eine rotierende Anwendung, mit einer prozessüberwacht gesteuerten Ringwalzmaschine, insbesondere aus einem aufgrund seiner Beschaffenheit rissempfindlichen Ringrohling aus Metall, umfassend die Schritte:
- Definieren zumindest eines sich über die Walzzeit erstreckenden Prozessfensters zu vorausgewählten Verfahrensparametern für ein bestimmtes, mit dieser Ringwalzmaschine in seine Endform zu formendes Ringwalzprodukt anhand von mit dieser Ringwalzmaschine in ihre Endform geformten Kalibrierproben, wobei das oder die Prozessfenster von bei der Durchführung des Verfahrens überwachten Prozessparametern durch die Prozessparameter derjenigen Kalibrierproben bestimmt werden, deren Walzprodukt den an das herzustellende Ringwalzprodukt gestellten Anforderungen genügen, wobei die vorausgewählten Verfahrensparameter wenigstens zwei der folgenden Verfahrensparameter umfassen:
   - Ringwachsgeschwindigkeit,
   - Axiale Walzkraft,
   - Radiale Walzkraft,
   - Walzzeit,
   - Temperatur des Ringrohlings während des Walzprozesses und nachfolgend
- konturiertes Ringwalzen von Ringrohlingen zum Herstellen der Ringwalzprodukte, wobei zumindest ein auf ein Prozessfenster Einfluss nehmende Verfahrensparameter als Vorsteuergröße für die maschinenseitige Walzprozessteuerung verwendet wird.

Mit beiden vorgenannten Verfahren ist sichergestellt, dass mit der Ringwalzmaschine, ausgehend von den vordefinierten Ringrohlingen ohne manuelles Eingreifen und somit reproduzierbar Ringwalzprodukte geformt werden können, die selbst in engen Toleranzgrenzen gefertigt werden müssen.
Die Verfahrensparameter zum Ansteuern der Ringswalzmaschine werden anhand von Kalibrierproben gewonnen. Eingesetzt werden hierfür exakt diejenigen Ringrohlinge, aus denen das spätere Ringwalzprodukt erstellt werden soll. Somit fließen in die Festlegung der Verfahrensparameter das Walzverhalten des Ringrohlings und somit auch das Material, aus dem der Ringrohling hergestellt worden ist, ebenso ein, wie das Walzverhalten der Ringwalzmaschine beim Walzen eines solchen Ringrohlings.
Diese Verfahrensparameter werden über die Walzzeit erfasst, sodass in die Definition der Prozessfenster walzzeitabhängige Änderungen in dem Materialverhalten des Walzlings und/oder der Walzmaschine Einfluss nehmen. Überwacht werden zumindest zwei Verfahrensparameter, die ausgesucht sind aus der Gruppe der folgenden Verfahrensparameter: Ringwachsgeschwindigkeit, axiale Walzkraft, radiale Walzkraft, Walzzeit und Temperatur des Ringrohlings während des Walzprozesse. Es ist durchaus möglich auch zu weiteren Verfahrensparametern Prozessfenster zu definieren. Eine Auswahl von zumindest zwei Prozessfenstern aus den vorliegenden Verfahrensparametern wird jedoch als hinreichend angesehen. Es versteht sich, dass bei einer größeren Zahl an überwachten Verfahrensparametern, zu denen zuvor Prozessfenster definiert worden sind, die Überwachungsqualität verbessert wird.
Einfluss nimmt in die Definition der Prozessfenster die Reaktion der Walzmaschine auf Änderungen in der Steuerung. Insofern ist es bei diesem Konzept letztendlich unerheblich, wie eine bestimmte Walzmaschine auf eine Vorsteuerung und anschließende Steuerung reagiert, da dieses über die Kalibrierproben in Bezug auf das gewünschte Walzergebnis - Geometrie und Gefüge - kontrolliert und so lange geändert wird, bis das Ringwalzprodukt mit den gewünschten Eigenschaften geformt wird.

Aus den Prozessparametern, die für das Walzen der Kalibrierproben ermittelt werden, werden über die Walzzeit sich erstreckende Prozessfenster definiert. Für diese Prozessfenster, die durch jeweils eine unter Sollwertkurve und eine obere Sollwertkurve begrenzt sind, werden diejenigen Prozessparameter verwendet, mit denen Vorwalzprodukte erstellt worden sind, die den an das spätere Ringwalzprodukt gestellten Anforderungen genügen. Dieses kann beispielsweise durch eine Mittelung oder durch Bestimmen von Hüllkurven der Verfahrensparameterkurven, die Einfluss auf ein solches Prozessfenster haben, vorgenommen werden. Ebenso kann auf andere Weise aus den Verfahrensparametern der Kalibrierproben die für das Walzen des eigentlichen Ringwalzproduktes verwendeten Vorsteuergrößen ermittelt werden. Durch die unter und obere Sollwertkurve kann mitunter anhand des Prozessfensters diejenige Energie definiert werden, die in dem Walzprozess über die Walzzeit eingebracht wird.

Sind die Prozessfenster und damit die Vorsteuergrößen über die Walzzeit bestimmt, kann anschließend der eigentliche Herstellungsprozess beginnen, mit dem Ringrohlinge zu den gewünschten Ringwalzprodukten, typischerweise in mehreren Schritten gewalzt werden. Bei einem mehrschrittigen Walzen werden entsprechend Prozessfenster für jeden Walzschritt definiert.

Gemäß dem ersten Lösungsvorschlag werden die Verfahrensparameter, die Einfluss auf die zumindest zwei vordefinierten Prozessfenster haben, überwacht. In die anschließende Be- und/oder Verarbeitung gehen jedoch nur diejenigen Ringwalzprodukte ein, deren aktuell erfasste Prozessparameter innerhalb der vordefinierten Prozessfenster liegen. Ringwalzprodukte, bei denen in einem Prozessfenster eine Abweichung festzustellen ist, weisen demnach Abnormalitäten auf und gehen nicht in die weitere Be- und/oder Verarbeitung ein. Auf diese Weise ist sichergestellt, dass nur solche Ringwalzprodukte in die weitere Be- und/oder Verarbeitung eingehen, die den geforderten Kriterien genügen. Dieses schließt die Forderung an ein auch umfänglich gleiches Gefüge ein.

Aufgrund des sich typischerweise ändernden Materialverhaltens des Walzlings über die Walzzeit und Änderungen in dem Verhalten der Ringwalzmaschine berücksichtigenden Prozessparametern, können die Ringwalzprodukte in engen Toleranzgrenzen hergestellt werden, vor allem ohne die Notwendigkeit eines manuellen Eingriffes in den Walzprozess.
Gemäß dem zweiten Lösungsansatz ist vorgesehen, dass über die Walzzeit die Ringwalzmaschine in einer vorgegebenen Taktung mit Vorsteuergrößen angesteuert wird, die sich über die Walzzeit hin ändern können. Mithin sind diese Vorsteuergrößen von dem vordefinierten Prozessfenster abhängig. Diese können beispielsweise auf einer zwischen der oberen Sollwertkurve und unteren Sollwertkurve liegenden Kurve angeordnet sein, wobei der Verlauf dieser Ansteuerkurve nicht dem Verlauf des Prozessfensters bzw. seiner oberen und unteren Sollwertkurve entsprechen muss. Auf diese Weise fließt in die Ansteuerung der Ringwalzmaschine das Umformungsverhalten des Ringrohlings und das Maschinenverhalten über die Walzzeit ein. Daher ist es auch mit diesem Konzept möglich, Ringwalzprodukte auch in engen Toleranzgrenzen in Bezug auf die Geometrie und das Gefüge reproduzierbar herzustellen.

In einer Weiterbildung dieses Verfahrens ist vorgesehen, dass dieses mit dem zuerst beschriebenen Verfahren kombiniert wird.
Von besonderem Vorteil dieser Verfahren ist, dass die Ringwalzmaschine selbst keine aufwendigen oder kostenträchtigen Erweiterungen benötigt, um in den Anforderungen entsprechender reproduzierbarer Art und Weise Ringwalzprodukte in besonders engen Toleranzgrenzen herstellen zu können. Vielmehr ist die vorhandene Maschinensteuerung der Ringwalzmaschine ausreichend, um den Walzprozess zum Herstellen reproduzierbarer Ringwalzprodukte zu überwachen. Von Vorteil ist auch, dass das Verfahren ausgeführt werden kann, ohne dass die Gefahr einer Entstehung von groben Korn besteht. Ein derartiges lokales Kornwachstum kann durch eine entsprechende Umformrate verhindert werden. Schließlich kann beim Ringwalzen in jedem Walzschritt jeder Bereich im Querschnitt des Ringes einer vorgegebenen Umformrate unterworfen werden. Beim Ringwalzen kann der letzte Walzschritt, der bei einem Schmiedeprozess für die Entstehung von bleibendem groben Korn verantwortlich ist, so gefahren werden, dass sämtliche Querschnittsbereiche des Ringes einer hinreichenden Umformung unterworfen werden, um eine Entstehung von grobem Korn wirksam zu unterdrücken.

Prozessfenster wird man in Bezug auf die typischerweise ohnehin ringwalzmaschinenseitig überwachten Verfahrensparameter anlegen und daraus jeweils die Vorsteuergrößen ableiten. Die Prozessfenster umfassen Prozessparameter, wie beispielsweise die Ringwachsgeschwindigkeit oder die sich während des Walzprozesses ändernde Temperatur des Walzlings als Ergebnisgrößen, während andere Prozessfenster, wie beispielsweise die axiale und/oder radiale Walzkraft oder die Walzzeit auf das Walzergebnis Einfluss nehmende Aktoren betreffen. Vorzugsweise wird man als Prozessfenster Verfahrensparameter aus jeder der beiden vorgenannten Gruppen definieren.
Neben den sich bereits aus den vorstehenden Beschreibungen ergebenden Vorteilen der Reproduzierbarkeit bei diesem Konzept des Ringwalzens haben diese Verfahren gegenüber einem Gesenkschmieden zudem den Vorteil, dass die Menge von ungenutztem Material (Materialabfall) auf ein Minimum reduziert werden kann. Herauszustellen ist an dieser Stelle auch, dass sich mit dem Ringwalzverfahren Geometrien erzeugen lassen, die sich mit Schmieden nicht herstellen lassen, wie beispielsweise Hinterschnitte. Aus diesem Grunde ist es beispielsweise möglich, in ein und demselben Walzprozess ein Ringwalzprodukt herzustellen, dass das eigentliche Endprodukt mehrfach und zwar in einer spiegelsymmetrischen Anordnung zueinander enthält. Damit können in einem einzigen Walzprozess mehrere zunächst zusammenhängende Ringwalzprodukte erstellt werden, wobei es nach dem Walzen nur noch erforderlich ist, das Ringwalzprodukt in seine Einzelprodukte zu trennen. Auch derartige Produkte sind im Rahmen dieser Ausführungen als Ringwalzprodukte angesprochen.
Die vorbeschriebenen Verfahren eignen sich aufgrund der beschriebenen Eigenschaften auch zum Herstellen von Ringwalzprodukten aus rissempfindlichen Legierungen, wie dieses beispielsweise bei Nickelbasislegierungen, wie etwa UDIMET® 720 oder Inconel® 718 neben anderen der Fall ist.

Dieses liegt in der besonderen und sehr anpassungsfähigen Einstellung der einzelnen Ringwalzschritte begründet. Daher liegt eine bevorzugte Anwendung dieses Verfahrens in der Herstellung von Ringwalzprodukten aus einer derartigen Legierung, vor allem wenn diese Ringwalzprodukte in höher beanspruchten Bereichen, wie beispielsweise bei Triebwerken eingesetzt werden, und zwar auch als rotierende Teile.

Nachfolgend sind die beanspruchten Verfahren anhand von Diagrammen erläutert. Es zeigen:
- **Fig. 1:**: ein Diagramm, darstellend die radiale Walzkraft, aufgetragen über die Walzzeit,
- **Fig.2:**: ein Diagramm, darstellend die axiale Walzkraft, aufgetragen über die Walzzeit,
- **Fig. 3:**: ein Diagramm, darstellend die Ringwachsgeschwindigkeit, aufgetragen über die Walzzeit, und
- **Fig. 4:**: ein Diagramm, darstellend die Temperatur eines Walzlings, aufgetragen über die Walzzeit.

Anhand von Kalibrierproben, die mit Ringrohlingen vorgenommen wurden, die denjenigen entsprechen, mit denen auch die späteren Ringwalzprodukte hergestellt werden, sind die Prozessparameter als Vorsteuergrößen bestimmt worden, mit denen das Ringwalzverfahren durchgeführt werden soll. Für die Prozessführung der Kalibrierproben werden, um die Anzahl der Kalibrierproben nicht zu groß werden zu lassen, aus vorherigen Simulationen gewonnene Prozessparameter verwendet. Aus einer bestimmten Anzahl an konkret an der für die Herstellung der Ringwalzprodukte vorgesehenen Ringwalzmaschine gewalzten Kalibrierproben werden die Verfahrensparameter bestimmt, die eingehalten werden müssen, damit die spätere Prozessführung zum Herstellen der gewünschten Ringwalzprodukte ohne manuellen Eingriff und in den gewünschten Toleranzgrenzen hergestellt werden können. Eingesetzt wird eine Radial-Axial-Ringwalzmaschine. Ausgewertet werden die Ergebnisse derjenigen Kalibrierproben, mit denen in dem zu betrachtenden Walzschritt das gewünschte Walzergebnis hinsichtlich Geometrie und Gefüge erreicht wird ist. Aus den Prozessparametern der Kalibrierproben wurde in Bezug auf bestimmte Verfahrensparameter eine untere Sollwertkurve und eine obere Sollwertkurve definiert, welche beiden Kurven ein Prozessfenster begrenzen. Jeder Ringrohling, der mit Verfahrensparametern gewalzt wird, die in diesen Prozessfenstern liegen, genügt sodann den Anforderungen, die an das mit diesem Walzschritt geformte Ringwalzprodukt gestellt sind, und zwar in Bezug auf die Geometrie und das Gefüge. Somit gehen in eine weitere Be- und/oder Verarbeitung nur diejenigen Ringwalzprodukte ein, deren aktuelle Prozessparameter innerhalb der vordefinierten Prozessfenster liegen.

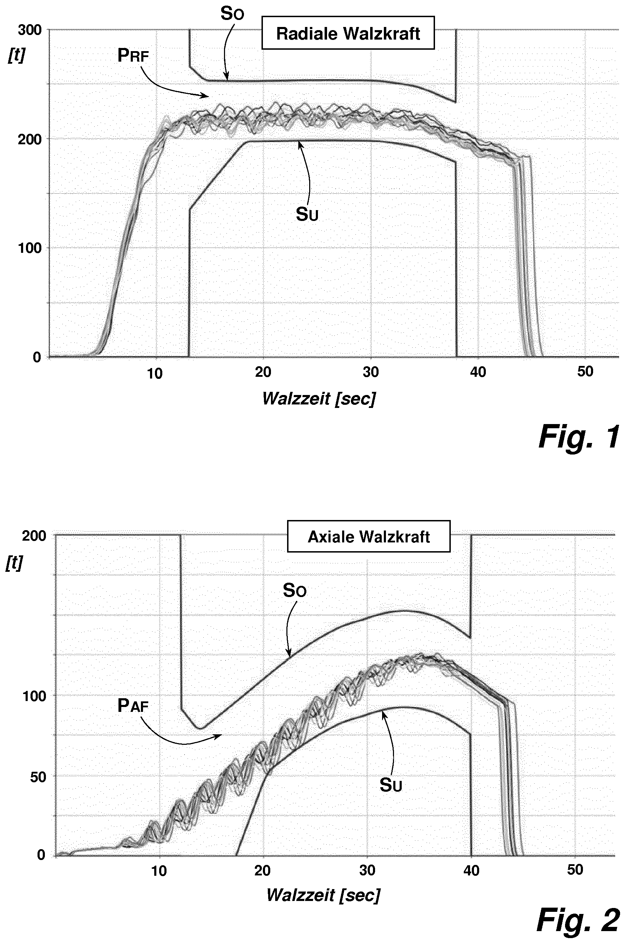

In Figur 1 ist das Prozessfenster für die radiale Walzkraft wiedergegeben, welches Prozessfenster sich zwischen einer unteren Sollwertkurve Su und einer oberen Sollwertkurve So befindet. Das Prozessfenster ist in Figur 1 mit dem Bezugszeichen P_{RL} angegeben. Der Verlauf des Prozessfensters P_{RL} über die Walzzeit zeigt, dass bei diesem Walzschritt die radiale Walzkraft nicht konstant bleibt, sondern zum Ende des Walzschrittes hin reduziert wird, um das gewünschte Walzergebnis zu erreichen. Damit bei dem dargestellten Ausführungsbeispiel das Ringwalzprodukt die gewünschten Eigenschaften aufweist, wird das Verfahren unter Berücksichtigung mehrerer Prozessfenster durchgeführt. Für den Ringwalzprozess zum Herstellen von Ringwalzprodukten werden die aktuellen Prozessparameter somit zumindest in Bezug auf die vordefinierten Prozessfenster überwacht, und zwar dahingehend, ob Abweichungen aus den bzw. den zugelassenen Prozessfenstern festzustellen sind oder nicht.

Figur 2 zeigt ein Diagramm entsprechend demjenigen der Figur 1, in der über die Walzzeit die Änderung der axialen Walzkraft aufgetragen ist. Das diesbezügliche Prozessfenster P**_{AF}**, begrenzt durch die untere Sollwertkurve Su und die obere Sollwertkurve So als Hüllkurven zeigt im Unterschied zu dem Verlauf des Prozessfensters P_{RL} über die Walzzeit hinweg einen anderen Verlauf. Während zum Erzielen der gewünschten Eigenschaften die radiale Walzkraft in einem ersten Zeitabschnitt bis zur einsetzenden Reduzierung derselben quasi konstant bleiben soll, muss die axiale Walzkraft über die Walzzeit hinweg bis zu einem Maximum hin ansteigen, um in einem letzten Walzabschnitt ebenfalls reduziert zu werden.

In den beiden Diagrammen der Figuren 1 und 2 sind die Verfahrensparameterkurven von mit der Ringwalzmaschine gewalzten Ringrohlingen eingetragen, wobei die Ringwalzmaschine mit Vorsteuergrößen bezüglich der radialen Walzkraft und der axialen Walzkraft über die Walzzeit hinweg angesteuert worden ist, damit das Ringwalzprodukt den gewünschten Anforderungen genügt. Die Schwankungsbreite in dem jeweils beobachteten Verfahrensparameter - radiale Walzkraft bzw. axiale Walzkraft - resultiert vornehmlich aus der maschinenseitigen Regelung des radialen bzw. axialen Walzspaltes.

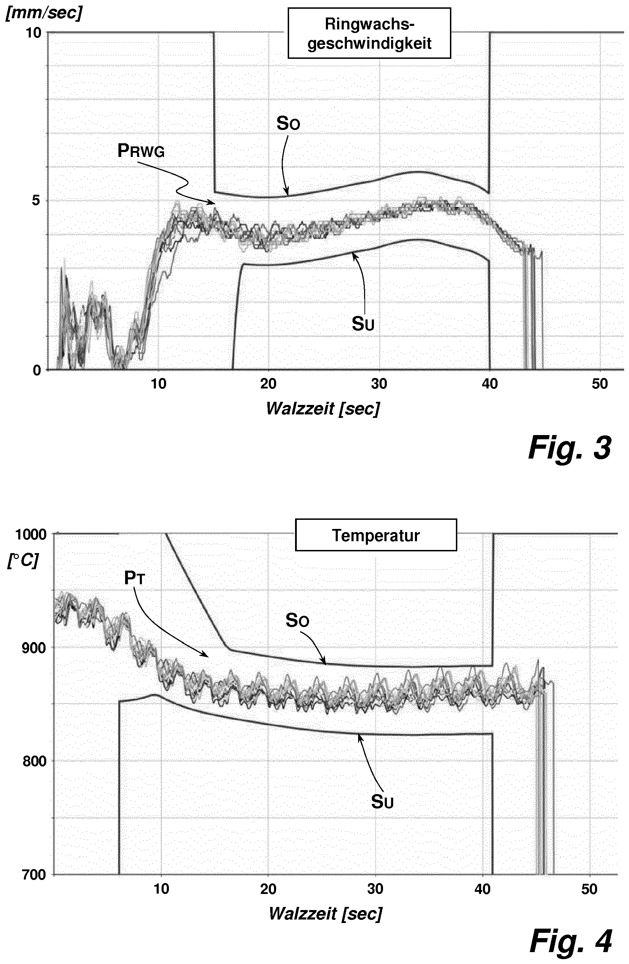

Figur 3 zeigt ein Diagramm, in dem das die Ringwachsgeschwindigkeit definierende Prozessfenster P**_{RGW}**, aufgetragen über die Walzzeit wiedergegeben ist. Ermittelt worden ist das Prozessfenster P**_{RGW}** in derselben Weise, wie dieses zu den Prozessfenstern P**_{RL}** und P**_{AL}** bereits beschrieben ist. Auch bezüglich des Verfahrensparameters der Ringwachsgeschwindigkeit zeigt Figur 3 deutlich, dass zum Erzielen der gewünschten Eigenschaften des Ringwalzproduktes in diesem konkreten Ausführungsbeispiel das Ringwachstum über die Walzzeit nicht konstant ist. Typisch ist bezüglich des Ringwachstums ein anfängliches Einschwingen, welches nach etwa acht Sekunden der Walzzeit abgeschlossen ist. Bedingt ist dieses durch Exzentrizitäten und/oder eine ungleiche Verteilung von Material in dem Ringrohling. Dieses wird in den ersten Sekunden des Walzens ausgeglichen.

Figur 4 zeigt den benötigten Temperaturverlauf, den ein Walzling einhalten muss, um den an das Ringwalzprodukt des in den Diagrammen darstellten Ringwalzschrittes zu genügen, anhand des Prozessfensters P**_{T}**.

Neben den in den Diagrammen der Figuren 1 bis 4 gezeigten Prozessfenstern P**_{RL}**, P**_{AL}**, P**_{RGW}** und P**_{T}** kann eine Überwachung weiterer Verfahrensparameter in derselben Art und Weise erfolgen.

Es versteht sich, dass die in den Figuren beispielhaft gezeigten Prozessfenster sich auf eine ganz bestimmte Geometrie des Ringwalzrohlings und des daraus hergestellten Ringwalzproduktes beziehen und dass bei einer Änderung der Geometrie und/oder des Materials die Prozessfenster zum Erzielen des jeweils gewünschten Ringwalzproduktes über die Walzzeit hinweg einen anderen Verlauf zeigen. Bei dem in den Diagrammen der Figuren 1 bis 4 gezeigten Ringrohlingen hat es sich um solche aus einer Nickelbasislegierung (Inconel® 718) gehandelt. Damit das Walzprodukt den gewünschten Anforderungen entsprechend feinkörnig ist, ist der Walzprozess unterhalb der δ -Solvus-Temperatur durchgeführt worden, wie dieses auch aus dem Prozessfenster P**_{T}** deutlich wird.

Untersuchungen wurde zudem an Ringwalzrohlingen aus einer anderen Nickelbasislegierung, namentlich der Legierung UDIMET® 720 durchgeführt. Die Ergebnisse waren gleichermaßen zufrieden stellend.
Nachstehend sind die Legierungsspektrum der benutzten Versuchslegierungen wiedergegeben:

| | UDIMET® 720 | Inconel® 718 |
|---|---|---|
| Ni | Rest | Rest |
| Co | 14,7 | |
| Fe | | 18 |
| Cr | 16,0 | 18 |
| Mo | 3,0 | 3,0 |
| W | 1,25 | |
| Al | 2,0 | 0,45 |
| Ti | 5,0 | 0,9 |
| Nb | | 5,0 |
| Zr | 0,03 | |
| B | 0,02 | 0,004 |

Die Ringrohlinge sind aus der Nickelbasislegierung in an sich bekannter Weise hergestellt worden, und zwar durch Weiterverarbeiten eines geschmiedeten Stutzens, der in einem ersten Schritt gestaucht, anschließend geprägt und in einem dritten Schritt gelocht worden ist. Sämtliche Prozessschritte sind als Warmumformschritte durchgeführt worden.

Sollen aus Ringrohlingen aus einer Nickelbasislegierung Ringwalzprodukte mit einem besonders feinkörnigen Gefüge geformt werden, wird der Ringwalzrohling vorzugsweise über einen Stauchprozess, wie vorstehend umrissen, erstellt, da dann bereits in einem großen Volumenbereich der Ringrohling ein feines Korn aufweist.
Mit dem konturierten Ringwalzprozess ist es möglich, auch komplexere Strukturen in dem Ringwalzprodukt zu erstellen. Dabei kann es, um ein zu rasches Auskühlen diesbezüglich exponierter Bereiche, wie etwa in dünneren Abschnitten oder an Kanten zu verhindern, erforderlich sein, diese Bereiche während des Ringwalzens adaptiv zusätzlich zu erwärmen.
In besonderer Weise kann durch das Ringwalzen über den gesamten Querschnitt des Walzproduktes gesehen ein Mindestumformgrad eingehalten werden, um Ausbildung von groben Korn wirksam zu unterdrücken.

## Patentansprüche

1. Verfahren zum reproduzierbaren Herstellen eines konturierten Ringwalzproduktes für eine rotierende Anwendung, mit einer prozessüberwacht gesteuerten Ringwalzmaschine, insbesondere aus einem aufgrund seiner Beschaffenheit rissempfindlichen Ringrohling aus Metall, umfassend die Schritte:
- Definieren zumindest eines sich über die Walzzeit erstreckenden Prozessfensters zu vorausgewählten Verfahrensparametern für ein bestimmtes, mit dieser Ringwalzmaschine in seine Endform zu formendes Ringwalzprodukt anhand von mit dieser Ringwalzmaschine in ihre Endform geformten Kalibrierproben, wobei das oder die Prozessfenster von bei der Durchführung des Verfahrens überwachten Prozessparametern durch die Prozessparameter derjenigen Kalibrierproben bestimmt werden, deren Walzprodukt den an das herzustellende Ringwalzprodukt gestellten Anforderungen genügen, wobei die vorausgewählten Verfahrensparameter wenigstens zwei der folgenden Verfahrensparameter umfassen:
- Ringwachsgeschwindigkeit,
- axiale Walzkraft,
- radiale Walzkraft,
- Walzzeit,
- Temperatur des Ringrohlings während des Walzprozesses und nachfolgend
- konturiertes Ringwalzen von Ringrohlingen zum Herstellen der Ringwalzprodukte, wobei die aktuellen Walzparameter des Walzlings in Bezug auf die zumindest zwei ausgewählten Verfahrensparameter erfasst und daraufhin ausgewertet werden, ob diese Verfahrensparameter innerhalb des vordefinierten Prozessfensters liegen und dass nur diejenigen Ringwalzprodukte in die weitere Be- und/oder Verarbeitung eingehen, die mit Verfahrensparametern ringgewalzt worden sind, die innerhalb der Prozessfenster liegen.

2. Verfahren zum reproduzierbaren Herstellen eines konturierten Ringwalzproduktes für eine rotierende Anwendung, mit einer prozessüberwacht gesteuerten Ringwalzmaschine, insbesondere aus einem aufgrund seiner Beschaffenheit rissempfindlichen Ringrohling aus Metall, umfassend die Schritte:
- Definieren zumindest eines sich über die Walzzeit erstreckenden Prozessfensters zu vorausgewählten Verfahrensparametern für ein bestimmtes, mit dieser Ringwalzmaschine in seine Endform zu formendes Ringwalzprodukt anhand von mit dieser Ringwalzmaschine in ihre Endform geformten Kalibrierproben, wobei das oder die Prozessfenster von bei der Durchführung des Verfahrens überwachten Prozessparametern durch die Prozessparameter derjenigen Kalibrierproben bestimmt werden, deren Walzprodukt den an das herzustellende Ringwalzprodukt gestellten Anforderungen genügen, wobei die vorausgewählten Verfahrensparameter wenigstens zwei der folgenden Verfahrensparameter umfassen:
- Ringwachsgeschwindigkeit,
- axiale Walzkraft,
- radiale Walzkraft,
- Walzzeit,
- Temperatur des Ringrohlings während des Walzprozesses und nachfolgend
- konturiertes Ringwalzen von Ringrohlingen zum Herstellen der Ringwalzprodukte, wobei zumindest ein auf ein Prozessfenster Einfluss nehmender Verfahrensparameter als Vorsteuergröße für die maschinenseitige Walzprozessteuerung verwendet wird.

3. Verfahren nach Anspruch 2, **dadurch gekennzeichnet, dass** die aktuellen Walzparameter des Walzlings in Bezug auf die zumindest zwei ausgewählten Verfahrensparameter erfasst und daraufhin ausgewertet werden, ob diese Verfahrensparameter innerhalb des vordefinierten Prozessfensters liegen und dass nur diejenigen Ringwalzprodukte in die weitere Be- und/oder Verarbeitung eingehen, die mit Verfahrensparametern ringgewalzt worden sind, die innerhalb der Prozessfenster liegen.

4. Verfahren nach einem der Ansprüche 1 bis 3, **dadurch gekennzeichnet, dass** der Ringrohling für die Dauer des Ringwalzens eine nur wenig unterhalb seiner Solvus-Temperatur liegende Temperatur aufweist oder auf einer solchen Temperatur gehalten wird, indem während des Walzprozesses der Ringrohling ein- oder mehrmals nacherwärmt wird.

5. Verfahren nach einem der Ansprüche 1 bis 4, **dadurch gekennzeichnet, dass** während des Ringwalzens des Ringrohlings Querschnittsbereiche, die einer rascheren Auskühlung unterliegen, nacherwärmt werden.

6. Verfahren nach einem der Ansprüche 1 bis 5, **dadurch gekennzeichnet, dass** die ersten Kalibrierproben mit aus Simulationen gewonnenen Verfahrensparametern auf der Ringwalzmaschine gewalzt werden.

7. Verfahren nach einem der Ansprüche 1 bis 6, **dadurch gekennzeichnet, dass** die Ringrohlinge aus einer Nickelbasislegierung gefertigt sind.

8. Verfahren nach Anspruch 7, **dadurch gekennzeichnet, dass** das Verfahren an Ringrohlingen aus einer Legierung UDIMET® 720 oder Inconel® 718 durchgeführt wird.

9. Verfahren nach einem der Ansprüche 1 bis 8, **dadurch gekennzeichnet, dass** aus den Ringrohlingen als Ringwalzprodukt ein rotierendes Triebwerksteil, etwa eine Turbinenscheibe, gefertigt wird.

## Claims

1. Method for reproducibly producing a contoured ring rolling product for a rotating application, with a ring rolling machine controlled in a process-monitored manner, in particular from a metal ring blank of such a nature that it is susceptible to cracking, comprising the steps:
- defining at least one process window, extending over the rolling time, in relation to preselected process parameters for a specific ring rolling product that is to be brought into its final form by this ring rolling machine on the basis of calibrating specimens that have been brought into their final form by this ring rolling machine, wherein the process window or windows of process parameters monitored when carrying out the process is/are determined by the process parameters of those calibrating specimens of which the rolled product meets the requirements demanded of the ring rolling product to be produced, wherein the preselected process parameters comprise at least two of the following process parameters:
- ring growing rate,
- axial rolling force,
- radial rolling force,
- rolling time
- temperature of the ring blank during the rolling process, and subsequently
- ring rolling of ring blanks in a contoured manner to produce the ring rolling products, wherein the rolling parameters of the rolled blank at the time are recorded with reference to the at least two selected process parameters and then evaluated to ascertain whether these process parameters lie within the predefined process window, and only those ring rolling products that have been ring-rolled with process parameters that lie within the process window are passed on for further machining and/or processing.

2. Method for reproducibly producing a contoured ring rolling product for a rotating application, with a ring rolling machine controlled in a process-monitored manner, in particular from a metal ring blank of such a nature that it is susceptible to cracking, comprising the steps:
- defining at least one process window, extending over the rolling time, in relation to preselected process parameters for a specific ring rolling product that is to be brought into its final form by this ring rolling machine on the basis of calibrating specimens that have been brought into their final form by this ring rolling machine, wherein the process window or windows of process parameters monitored when carrying out the process is/are determined by the process parameters of those calibrating specimens of which the rolled product meets the requirements demanded of the ring rolling product to be produced, wherein the preselected process parameters comprise at least two of the following process parameters:
- ring growing rate,
- axial rolling force,
- radial rolling force,
- rolling time
- temperature of the ring blank during the rolling process, and subsequently
- ring rolling of ring blanks in a contoured manner to produce the ring rolling products, wherein at least one process parameter exerting an influence on a process window is used as a preprocessing value for the machine-side rolling process control.

3. Method according to claim 2, **characterised in that** the rolling parameters of the rolled blank at the time are recorded with reference to the at least two selected process parameters and then evaluated to ascertain whether these process parameters lie within the predefined process window, and that only those ring rolling products pass to further machining and/or processing which have been ring-rolled with process parameters that lie within the process window.

4. Method according to any one of claims 1 to 3, **characterised in that** for the duration of the ring rolling the ring blank exhibits a temperature which is only a little below its solvus temperature, or is held at such a temperature, **in that**, during the rolling process, the ring blank is reheated one or more times.

5. Method according to any one of claims 1 to 4, **characterised in that,** during the ring rolling of the ring blank, cross-section regions which are subject to more rapid cooling are reheated.

6. Method according to any one of claims 1 to 5, **characterised in that** the first calibrating specimens are rolled on the ring rolling machine with process parameters which are derived from simulations.

7. Method according to any one of claims 1 to 6, **characterised in that** the ring blanks are made from a nickel-based alloy.

8. Method according to claim 7, **characterised in that** the method is carried out on ring blanks from an alloy of UDIMET® 720 or Inconel® 718.

9. Method according to any one of claims 1 to 8, **characterised in that** from the ring blanks, as a ring-rolled product, a rotating component of a propulsion unit is produced, such as a turbine blade.

## Revendications

1. Procédé de fabrication reproductible d'un produit profilé obtenu par laminage circulaire destiné à une utilisation rotative, avec un laminoir circulaire à pilotage automatique des processus, notamment à partir d'une ébauche ronde en métal sensible aux fissures en raison de ses propriétés, comportant les étapes suivantes :
- définition d'au moins une fenêtre de processus s'étendant sur toute la durée du laminage avec des paramètres process sélectionnés au préalable pour un produit précis obtenu par laminage circulaire à mettre en forme finale par laminage circulaire grâce à ce laminoir circulaire à l'aide d'échantillons d'étalonnage mis dans leur forme finale par ce laminoir circulaire, le ou les fenêtres de processus étant déterminées, au moment de l'exécution des paramètres process qui surveillent le processus, par les paramètres process des échantillons d'étalonnage dont le produit de laminage satisfait les exigences à remplir par le produit à fabriquer, obtenu par laminage circulaire, les paramètres process sélectionnés au préalable comportant au moins deux des paramètres process suivants :
- vitesse d'agrandissement de la couronne
- force de laminage axiale
- force de laminage radiale
- temps de laminage
- température de l'ébauche ronde pendant le processus de laminage
et suivis de
- laminage circulaire pour profiler des ébauches rondes afin de fabriquer les produits obtenus par laminage circulaire, les paramètres actuels de laminage de la pièce en cours de laminage étant définis par rapport à au moins deux des paramètres process sélectionnés et par la suite évalués pour vérifier que ces paramètres process respectent la fenêtre de processus prédéfinie et que les seuls produits obtenus par laminage circulaire acheminés pour la suite de l'usinage et/ou de la transformation sont ceux qui ont fait l'objet d'un laminage circulaire avec les paramètres process situés dans la fenêtre de processus.

2. Procédé de fabrication reproductible d'un produit profilé obtenu par laminage circulaire destiné à une utilisation rotative, avec un laminoir circulaire à pilotage automatique des processus, notamment à partir d'une ébauche ronde en métal sensible aux fissures en raison de ses propriétés, comportant les étapes suivantes :
- définition d'au moins une fenêtre de processus s'étendant sur toute la durée de laminage avec des paramètres process sélectionnés au préalable pour un produit précis obtenu par laminage circulaire à mettre en forme finale par laminage circulaire grâce à ce laminoir circulaire à l'aide d'échantillons d'étalonnage mis dans leur forme finale par ce laminoir circulaire, le ou les fenêtres de processus étant déterminées, au moment de l'exécution des paramètres process qui surveillent le procédé, par les paramètres process des échantillons d'étalonnage dont le produit de laminage satisfait les exigences à remplir par le produit à fabriquer, obtenu par laminage circulaire, les paramètres process sélectionnés au préalable comportant au moins deux des paramètres process suivants :
- vitesse d'agrandissement de la couronne
- force de laminage axiale
- force de laminage radiale
- temps de laminage
- température de l'ébauche ronde pendant le processus de laminage
et suivis de
- laminage circulaire pour profiler des ébauches rondes afin de fabriquer les produits obtenus par laminage circulaire, au moins un paramètre process exerçant une influence sur une fenêtre de processus, étant utilisé en tant que grandeur de pilotage pour la commande automatique du processus de laminage intégré au laminoir.

3. Procédé selon la revendication 2, **caractérisé en ce que** les paramètres actuels de laminage de la pièce en cours de laminage sont définis par rapport à au moins deux des paramètres process sélectionnés et par la suite évalués pour vérifier que ces paramètres process respectent la fenêtre de processus prédéfinie et que les seuls produits obtenus par laminage circulaire acheminés pour la suite de l'usinage et/ou de la transformation sont ceux qui ont fait l'objet d'un laminage circulaire avec les paramètres process situés dans la fenêtre de processus.

4. Procédé selon l'une des revendications 1 à 3, **caractérisé en ce que** l'ébauche ronde présente, pour la durée du laminage circulaire, une température maintenue légèrement sous la température de solvus, en réchauffant une ou plusieurs fois l'ébauche ronde pendant le processus de laminage.

5. Procédé selon l'une des revendications 1 à 4, **caractérisé en ce que** les zones des sections transversales de l'ébauche ronde, soumises à un refroidissement plus rapide pendant le laminage, sont réchauffées.

6. Procédé selon l'une des revendications 1 à 5, **caractérisé en ce que** les premiers échantillons d'étalonnage sont laminés sur le laminoir circulaire à l'aide de paramètres process déterminés par simulation.

7. Procédé selon l'une des revendications 1 à 6, **caractérisé en ce que** les ébauches rondes sont fabriquées dans un alliage à base de nickel.

8. Procédé selon la revendication 7, **caractérisé en ce que** le procédé est appliqué à des ébauches rondes constituées d'un alliage UDIMET® 720 ou Iconel® 718.

9. Procédé selon l'une des revendications 1 à 8, **caractérisé en ce que** les produits obtenus par laminage circulaire à partir d'ébauches rondes servent à fabriquer une pièce rotative d'une groupe moteur, par exemple un disque de turbine.
